# FASCICULE DE BREVET EUROPEEN

(11) **EP 3 420 066 B1**
(45) Date de publication et mention de la délivrance du brevet: **05.08.2020**
(21) Numéro de dépôt: 17705931.8
(22) Date de dépôt: 23.02.2017
(51) Int. Cl.: C12F 3/00, C12H 1/22, C12G 3/00, C12F 3/08, E04H 7/00

(54) **PROCÉDÉ DE MATURATION D'AU MOINS UN LIQUIDE ALCOOLISÉ AVEC RÉCUPÉRATION DE COMPOSÉS VOLATILS ET INSTALLATION CORRESPONDANTE**
VERFAHREN ZUR REIFUNG MINDESTENS EINER ALKOHOLISCHEN FLÜSSIGKEIT UNTER RÜCKGEWINNUNG VON FLÜCHTIGEN VERBINDUNGEN UND ENTSPRECHENDE ANLAGE
MATURATION PROCESS OF AT LEAST ONE ALCOHOLIC LIQUID WITH THE RECOVERY OF VOLATILE COMPOUNDS AND APPARATUS FOR MAKING THE SAME

(30) Priorité: 24.02.2016 FR 1651513
(43) Date de publication de la demande: 02.01.2019
(73) Titulaire: Maroy, Renaud, 75015 Paris (FR); Maroy, Olivier, 16000 Angouleme (FR)
(72) Inventeur: MAROY, Olivier, 16000 Angouleme (FR)
(86) Numéro de dépôt international: PCT/EP2017/054242
(87) Numéro de publication internationale: WO 2017/144618

(56) Documents cités:
- GB-A- 2 518 147
- GB-A- 2 529 161
- US-A1- 2014 160 465

## Description

La présente invention concerne un procédé de maturation d'au moins un liquide alcoolisé dans un conteneur au moins en partie en bois.

L'invention concerne également une installation de maturation d'au moins un liquide alcoolisé.

Les liquides alcoolisés concernés sont des vins, des eaux de vie, ou des vins mélangés à des eaux de vie, qui vieillissent dans des tonneaux, barriques, foudres ou fût de bois, le plus souvent en chêne, entreposés dans un chai. Les chais sont des lieux, entrepôts, bâtiments ou pièces où sont stockés vins ou eaux de vie pour leur vieillissement en barriques, etc. Les chais sont des espaces clos dans lesquels peu de personnes pénètrent. Ils sont équipés de peu de machines excepté les chariots élévateurs électriques pour la plupart. Les chais récents sont maintenus à une température et à un degré d'hygrométrie optimal pour le vieillissement des vins et eaux de vies. L'air est maintenu saturé en alcool afin de limiter les évaporations.

Des échanges ont lieu pendant des années voire des dizaines d'années entre le liquide alcoolisé et le conteneur, et enrichissent le liquide alcoolisé en composés plus ou moins volatils lui conférant son arôme. L'oxygène présent dans le ciel gazeux du conteneur permet au liquide alcoolisé d'être oxydé de manière irréversible. L'oxygène est renouvelé par un apport d'oxygène provenant du chai à travers les parois du conteneur.

La maturation du liquide alcoolisé relâche à l'extérieur du conteneur des composés volatils en provenance du liquide alcoolisé ou du ciel gazeux. Ces composés volatils présents dans l'atmosphère du chai finissent par s'en échapper et sont, pour cette raison, appelés « part des anges ».

Ces composés volatils, ou « part des anges », permettent l'apparition de champignons *Baudoinia compniacensis* sur les murs à l'extérieur du chai. La prolifération des champignons donne à ces murs une couleur noirâtre. Pour limiter les pertes en composés volatils, GB2518147 décrit une installation dans laquelle la température et l'humidité sont strictement contrôlées au sein de l'enceinte de vieillissement, avec notamment la mise sous pression de l'enceinte. US2014/160465 décrit un système selon lequel le fût est entreposé dans une enceinte hermétiquement close, les pertes étant évaluées par des capteurs, lesquels vont permettre de modifier les conditions environnementales au sein de l'enceinte. GB2529161 propose une installation permettant d'accélérer le processus de maturation par apport de chaleur sous les fûts, ladite source de chaleur étant connectée au système de refroidissement d'un appareil de distillation.

Un but de l'invention est donc d'éliminer ou de réduire ces nuisances, c'est-à-dire en particulier de fournir un procédé de maturation prévenant ou limitant le développement de ces champignons, le procédé devant être compatible avec le fonctionnement traditionnel d'un chai et les normes alimentaires en vigueur, et si possible d'un coût modeste.

A cet effet, l'invention a pour objet un procédé selon la revendication 1.

Selon des modes particuliers de réalisation, le procédé comprend l'une ou plusieurs des caractéristiques correspondant aux revendications 2 à 9, prise(s) isolément ou selon toutes les combinaisons techniquement possibles.

L'invention a également pour objet une installation selon la revendication 10.

L'invention sera mieux comprise à la lecture de la description qui va suivre, donnée uniquement à titre de d'exemple et faite en se référant aux dessins annexés, sur lesquels :
- la figure 1 est une représentation schématique d'une installation selon l'invention, et
- la figure 2 est une représentation schématique de l'un des séparateurs représenté sur la figure 1.

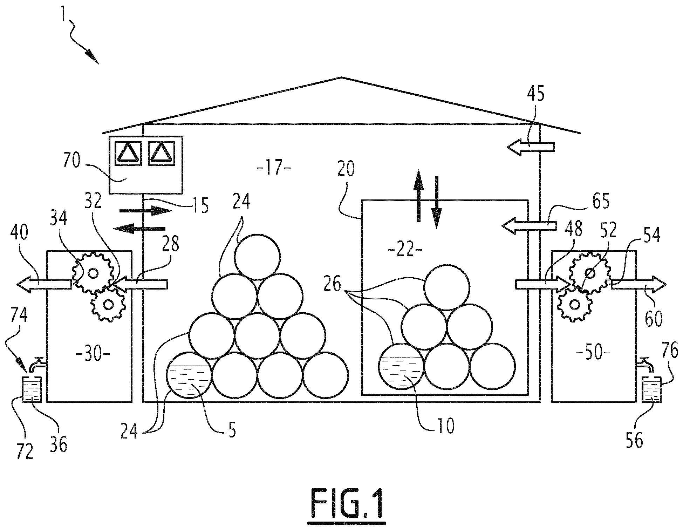

En référence à la figure 1, on décrit une installation 1 selon l'invention. L'installation 1 est destinée à la maturation de, par exemple, deux liquides alcoolisés 5, 10 destinés à devenir des boissons alcoolisés ou des ingrédients de boissons alcoolisés. En variante (non représentée), l'installation 1 réalise la maturation d'un plus grand nombre de liquides alcoolisés.

L'installation 1 est avantageusement un chai formant une première enceinte 15 définissant une atmosphère interne 17. L'installation 1 comprend par exemple une deuxième enceinte 20 située dans la première enceinte 15 et définissant une atmosphère interne 22, une pluralité de conteneurs 24 situés dans la première enceinte et renfermant le liquide alcoolisé 5, et une pluralité de conteneurs 26 situés dans la deuxième enceinte et renfermant le liquide alcoolisé 10.

L'installation 1 comprend un extracteur 28 pour extraire de la première enceinte 15 une partie de l'atmosphère interne 17, et un séparateur 30 adapté pour séparer un mélange gazeux 32 extrait par l'extracteur en au moins un mélange gazeux résiduel 34 et au moins un liquide récupéré 36. L'installation 1 comporte aussi un système d'évacuation 40 adapté pour évacuer au moins une partie non nulle, de préférence la totalité, du mélange gazeux résiduel 34 vers l'extérieur de la première enceinte 15, c'est-à-dire dans l'atmosphère externe au chai dans l'exemple, et un système d'admission d'air 45 dans la première enceinte 15.

L'installation 1 comprend également, dans l'exemple représenté, un extracteur 48 adapté pour extraire au moins une partie de l'atmosphère interne 22 de la deuxième enceinte 20, un séparateur 50 pour séparer un mélange gazeux 52 extrait par l'extracteur 48 en un mélange gazeux résiduel 54 et un liquide récupéré 56, un système d'évacuation 60, et un système d'admission d'air 65 respectivement analogues à l'extracteur 28, au séparateur 30, au système d'évacuation 40 et au système d'admission d'air 45.

Les liquides alcoolisés 5 et 10 sont des vins ou des eaux de vie comme mentionné ci-dessus. La maturation des liquides alcoolisés 5, 10 consomme de l'oxygène présent dans les atmosphères internes 17, 22 et relâche dans ces atmosphères internes des composés volatils provenant des liquides alcoolisés.

Les composés volatils comprennent de nombreux composants, parmi lesquels l'eau, des alcools, et des composés « aromatiques » (dégageant un arôme), tels que des aldéhydes, des esters, et éventuellement un ou plusieurs cétoacides. Les composés volatiles, ou « part des anges », ont un parfum très reconnaissable. Leur concentration dans les atmosphères internes 17, 22 est notamment fonction de la température moyenne dans la première enceinte 15 et la deuxième enceinte 20.

Les liquides récupérés 36, 56 sont destinés à former une ou plusieurs boissons alcoolisée ou un ou plusieurs ingrédient d'une composition, notamment une boisson alcoolisée ou un parfum.

Les enceintes au sens de l'invention sont soit formées par le chai lui-même, comme la première enceinte 15, soit sont une partie identifiable du chai, ou bien sont un conteneur situé dans le chai, comme la deuxième enceinte 20.

Selon des variantes non représentées, le nombre d'enceintes est plus élevé, et certaines sont par exemple contenues dans d'autres enceintes, ou avantageusement en communication les unes avec les autres.

La première enceinte 15 comprend avantageusement un ou plusieurs capteurs 70 adapté(s) pour mesurer le taux d'oxygène, et/ou le taux en l'un ou plusieurs des composés volatils, notamment des alcools, dans l'atmosphère interne 17. Avantageusement, les capteurs 70 sont adaptés pour mesurer l'un ou plusieurs des paramètres suivants de l'atmosphère interne 17 : température, hygrométrie, pression.

La première enceinte 15 et la deuxième enceinte 20 sont étanches ou semi-étanches. On entend par là que ces enceintes restreignent suffisamment les échanges gazeux entre leurs atmosphères internes 17, 22 et leur environnement extérieur, de sorte que les composés volatils s'échappant des conteneurs 24, 26 s'accumulent respectivement dans les atmosphères internes 17, 22. Par « s'accumule », on entend que la concentration en composés volatils dans les atmosphères internes 17, 22 est supérieure à celle de l'atmosphère entourant le chai, de sorte qu'un opérateur (non représenté), par exemple un maître de chai, puisse sentir la « part des anges » lorsqu'il respire les atmosphères internes 17, 22.

Une enceinte est soit un récipient, soit des récipients communicants entre eux, soit des récipients inclus l'un dans l'autre (partiellement ou entièrement), soit un lieu séparé de l'extérieur par des parois et disposants éventuellement d'ouvertures : un bâtiment, un chai, une salle de bâtiment, un ensemble de salles, etc.

Une enceinte, telle que la première enceinte 15 est par exemple préexistante. Dans ce cas, elle est préférentiellement aménagée. Le chai, par exemple, ou encore une salle dans laquelle des liquides alcoolisés sont transvasés de fûts jeunes à des fûts vieux, forment en eux-mêmes une enceinte semi-étanche, en ce qu'ils sont délimités par des murs, un sol et un toit quasi-étanches, mais comprennent des ouvertures pour le passage du personnel et éventuellement de l'air. De plus, l'enceinte peut comprendre des ouvertures ou des fuites liées à la construction du bâtiment. Lesdites fuites et ouvertures liées à la construction du bâtiment sont préférentiellement rendues étanches par des moyens supposés connus : spray de film polymères, mousse polymère, etc. Afin de ne pas introduire de produits volatiles toxiques dans le chai, cette étanchéisation est par exemple réalisée sur le toit et sur les parois extérieures du chai.

Préférentiellement, les accès pour le passage du matériel et les accès pour le personnel piéton sont différentiés. Chaque accès est préférentiellement d'une taille minimale adaptée au passage du personnel et/ou du matériel, selon le cas. Chaque accès permettant éventuellement le passage du personnel et du matériel nécessaire au fonctionnement du chai et à la maturation des liquides alcoolisés est préférentiellement équipé de mécanismes connus en eux-mêmes de minimisation d'échanges gazeux : sas, porte tambour, porte coulissante, porte sectionnelle, cloison à lamelles, porte traditionnelle, etc.

Chaque enceinte a préférentiellement son propre extracteur et son propre séparateur. Un même séparateur est éventuellement utilisé pour deux enceintes distinctes, mais alternativement et de manière dissociée si les liquides alcoolisés diffèrent entre ces enceintes.

Un enceinte est destinée à être ouverte aussi rarement que possible, et possède préférentiellement une ou plusieurs des caractéristiques suivantes :
- elle ne perturbe pas les mécanismes de vieillissement du liquide alcoolisé en assurant des paramètres de vieillissement identiques ou quasi-identiques : composition de l'atmosphère interne, ventilation, pression, température, hygrométrie, etc. et variation au cours du temps de ces paramètres. Néanmoins, le chai est avantageusement équipé de systèmes permettant de contrôler et d'ajuster tout ou partie de ces paramètres selon les souhaits du maître de chai. Notamment, le taux d'alcool dans l'atmosphère interne est avantageusement contrôlé ;
- elle permet l'inspection visuelle des conteneurs, par exemple par transparence sur toute sa surface ou via des fenêtres judicieusement placées ;
- elle permet de visualiser ou de mesurer si un conteneur est trop vide et si, par conséquent, un liquide alcoolisé pourrait y être ajouté ;
- elle permet le remplissage des conteneurs sans avoir à ouvrir ces derniers ;
- elle est préférentiellement aisée à ouvrir, l'ouverture étant suffisamment grande pour manipuler, entrer et sortir le ou les conteneurs ;
- elle comporte un bouchon (non représenté), pour un simple échange entre l'air ambiant du chai et l'air de l'enceinte en question ;
- elle est adaptée pour afficher des indicateurs ou appareils de mesure pour les grandeurs entrant directement ou indirectement dans le processus de vieillissement des liquides alcoolisés (O2, H2O, alcool, température, pression, ventilation...) ; et
- elle est équipée de systèmes de régulation de la température, de l'hygrométrie, de l'oxygène, de la ventilation, de la pression.

Bien que la première enceinte 15 et la deuxième enceinte 20 ne puissent être totalement étanches pour les raisons exposées ci-dessus, elles sont avantageusement étanchéifiées par les méthodes exposées ci-dessus.

Les conteneurs 24, 26 sont au moins en partie en bois ou contiennent du bois.

Les conteneurs permettent le vieillissement d'un alcool. Chaque conteneur autorise, entre l'extérieur et l'intérieur du conteneur, des échanges gazeux, dont l'entrée d'oxygène dans le conteneur et la sortie des composés volatils dans l'atmosphère interne de l'enceinte.

Selon des variantes, tout ou partie des conteneurs 24, 26 est en métal, en plastique, en terre cuite, en céramique, etc., avec des copeaux ou morceaux de bois à l'intérieur, en contact avec le liquide alcoolisé.

Les extracteurs 28 et 48 étant par exemple analogues l'un à l'autre, seul l'extracteur 28 sera décrit ci-après.

L'extracteur 28 comprend un système d'aspiration actif ou passif (c'est-à-dire avec ou sans un moteur), préférentiellement compatible avec les normes alimentaires pour les alcools. L'extracteur 28 est adapté pour délivrer le mélange gazeux 32 à traiter au séparateur 30. L'extracteur 28 comprend avantageusement une pompe péristaltique ou à membrane.

L'extracteur 28 est adapté pour prélever une partie de l'atmosphère interne 17 au moyen de tout système d'aspiration actif ou passif connus en lui-même, préférentiellement compatible avec les normes alimentaires pour les alcools, et pour envoyer le mélange gazeux 32 à traiter dans le séparateur 30. La tuyauterie utilisée dans l'extracteur 28 est elle-même préférentiellement compatible avec les normes alimentaires. L'extracteur 28 comprend avantageusement un système de filtration (non représenté), situé avant ou après l'entrée du système d'aspiration.

Du fait de la variation de la teneur en composés volatils en fonction de la température, et donc avec les saisons, le débit de l'extracteur 28 est préférentiellement réglable. Ce réglage est préférentiellement automatique et utilise un ou plusieurs paramètres représentatifs de la concentration en composés volatils dans l'atmosphère interne 17.

L'extracteur 28 est préférentiellement raccordé à la première enceinte 15 de manière étanche.

En variante, le raccord n'est pas étanche. Par exemple, le mélange gazeux 32 à traiter est en contact avec l'extérieur de la première enceinte 15 avant d'être admis dans l'extracteur 28.

Selon un mode particulier de réalisation, l'extracteur 28 est raccordé à plusieurs enceintes contenant préférentiellement des composés volatils issue de conteneurs contenant une eau de vie d'âge, de provenance, de cépage et de méthode de vieillissement similaires (âge des conteneurs par exemple).

L'extracteur 28 est avantageusement adapté pour contrôler le débit et le taux d'alcool contenu dans le mélange gazeux 32, et, avec le système d'admission d'air 45, réguler le taux d'alcool contenu dans l'atmosphère interne 17. L'extracteur 28 est préférentiellement équipé d'un système de filtration (poussières, particules, pollution, bactéries) non représenté.

Les séparateurs 30, 50 sont par exemple analogues l'un à l'autre, aussi seul le séparateur 30 sera décrit ci-après.

Le séparateur 30 est adapté pour recevoir le mélange gazeux 32 à traiter et le séparer en le mélange gazeux résiduel 34 appauvri en composés volatils par rapport au mélange gazeux à traiter, et au moins le liquide récupéré 36 contenant au moins une partie des composés volatils du mélange gazeux à traiter.

L'appauvrissement en alcools et en composés volatils est soit être total, pour prévenir complètement l'apparition de champignon, soit est partiel. Dans le second cas, dans le but de préparer une boisson alcoolisée, plus de la moitié de l'alcool et des composés organiques volatils est récupérée sous forme liquide. Dans le but d'extraire seulement des composés aromatiques volatils, le taux d'alcool dans le mélange gazeux résiduel 34 est éventuellement élevé, bien que, préférentiellement, l'alcool soit récupéré sous forme liquide dans sa plus grande part pour d'autres types de valorisation (ex : bioéthanol).

Le liquide récupéré 36 est par exemple stocké dans un récipient 72, possédant avantageusement une entrée unidirectionnelle 74 pour recevoir le liquide à stocker. De même, le séparateur 50 est adapté pour produire un liquide récupéré 56, par exemple stocké dans un récipient 76 analogue au récipient 72.

Le séparateur 30 est par exemple situé à l'extérieur de l'enceinte la plus grande (ici la première enceinte 15).

En variante (non représentée), le séparateur 30 est placé dans la première enceinte 15 ou même dans la deuxième enceinte 20.

Préférentiellement chaque séparateur est associé à une enceinte. Selon des modes particuliers de réalisation, plusieurs séparateurs sont utilisés pour une seule enceinte, ou inversement plusieurs enceintes avec un seul séparateur.

Préférentiellement le séparateur 30, en particulier ses éléments en contacts avec les gaz, liquides et solides issus de la première enceinte 15 respectent les normes alimentaires relatives aux boissons alcoolisées.

Le séparateur 30 comprend par exemple l'un ou plusieurs des modules suivants (non tous représentés) :
- au moins un module de séparation PSA (en anglais *pressure swing adsorption*), VSA (en anglais *vacuum swing adsorption*) ou TSA (en anglais *temperature swing adsorption*) contenant au moins un lit d'adsorbant, l'adsorbant étant adapté pour adsorber sélectivement l'air du mélange gazeux 32 à traiter par rapport à au moins une partie des composés volatils présents dans le mélange gazeux à traiter, ou au moins une partie des composés volatils par rapport à l'air,
- au moins un module de séparation à membrane(s),
- au moins un condenseur 80 adapté pour réaliser une condensation d'au moins une partie des composés volatils présents dans le mélange gazeux 32 à traiter, et
- au moins un distillateur adapté pour distiller un mélange comprenant au moins une partie des composés volatils présents dans le mélange gazeux 32 à traiter.

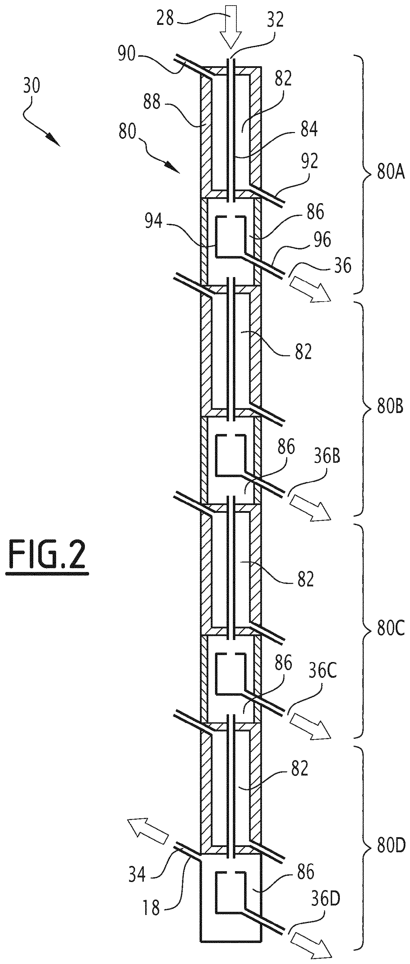

Avantageusement, le séparateur 30 est adapté pour réaliser une séparation fractionnée, comme représenté sur la figure 2, de manière à obtenir le liquide récupéré 36 et plusieurs autres liquides récupérés 36B, 36B, 36D comprenant respectivement une partie des composés volatils présents dans le mélange gazeux 32 à traiter.

En référence à la figure 2, on va maintenant décrire un exemple de séparateur 30 adapté pour réaliser une séparation par condensation étagée.

Dans cet exemple, le condenseur 80 comporte quatre modules de récupération 80A, 80B, 80C, 80D superposés et analogues les uns aux autres.

Chacun des modules de récupération 80A à 80D est adapté pour réaliser une condensation du mélange gazeux 32 à traiter respectivement à des températures T_{A}, T_{B}, T_{C} et T_{D}, données par ordre décroissant de température.

Chacun des modules de récupération 80A à 80D comprend une première partie 82 adaptée pour réaliser une condensation dans un tuyau 84 avantageusement garni de billes, par exemple en inox, et une deuxième partie 86 adaptée pour récupérer une phase condensée constituant respectivement les liquides récupérés 36, 36B, 36C, 36D.

La première partie 82 comprend une enceinte isolante 88, par exemple un vase de Dewar, ou une isolation en mousse de polyuréthane, une entrée 90, et une sortie 92 pour un fluide ou un solide adapté pour refroidir le mélange gazeux 32 à traiter.

La deuxième partie 86 comprend par exemple un récipient 94 adapté pour recevoir des gouttelettes de liquide condensé dans le tuyau 84 de la première partie 82, et une sortie 96 connectée au récipient 94 et adaptée pour évacuer respectivement les liquides récupérés 36, 36B, 36C, 36D.

Les éléments structuraux de la colonne 80, hormis l'isolant 88 sont préférentiellement en matériaux conforme avec les normes alimentaires pour l'eau-de-vie en vigueur dans le pays où est situé l'installation, très conducteur thermiquement pour le tuyau 84 et très peu pour les éléments composant l'enceinte isolante 88. Le cuivre est préférentiellement utilisé pour le tuyau 84 s'il est toléré par les normes alimentaires en vigueur pour l'eau-de-vie dans le pays où l'installation est située, sinon l'inox est préférentiellement utilisé. L'enceinte isolante est réalisée en matériaux préférentiellement peu conducteurs de la chaleur (exemple : mousse de polyuréthane) ou bien de type vase de Dewar.

Le tuyau 84 du premier module 80A est connecté fluidiquement à l'extracteur 28 pour recevoir le mélange gazeux 32 à traiter.

La deuxième partie 86 du dernier module 80D comporte une sortie 98 adaptée pour récupérer le mélange gazeux résiduel 34 après son passage successif dans les premières parties 82 des modules de récupération 80A à 80D.

Selon une variante non représentée, les modules de récupération 80A à 80D comprennent plusieurs tuyaux 84 et/ou plusieurs récipients 94.

Le séparateur 30 comprend également des systèmes (non représentés) d'alimentation, de renouvellement et de purge du fluide ou du solide de refroidissement.

Bien que le recours à plusieurs modules de récupération permette de limiter le phénomène de givrage, la colonne 80 est avantageusement équipée de systèmes de dégivrage.

Le fluide ou solide de refroidissement est par exemple de la carboglace.

Les liquides récupérés 36B, 36C, 36D sont destinés à former une ou plusieurs boissons alcoolisée ou un ou plusieurs ingrédient d'une composition, notamment une boisson alcoolisée ou un parfum.

D'autres modes de réalisation du séparateur 30 (non représentés) sont décrits ci-après.

### Par adsorption sélective de l'air contenu dans le mélange gazeux à traiter

Le séparateur selon l'invention utilise une méthode connue d'adsorption (PSA, VSA, TSA, etc.) pour adsorber spécifiquement des molécules de l'air atmosphérique (N2, O2, CO2, Ar, Ne, Xe, He, etc.), et/ou de l'eau, et des molécules issues de la pollution (CO, NO, NO2, SO, SO2, particules fines, etc.), et comprend préférentiellement au moins un adsorbant dont le diamètre des orifices est inférieur au diamètre moléculaire du composé volatil le plus petit (par exemple l'éthanol). Les méthodes d'adsorption du diazote ou du dioxygène sont connues et utilisées de manière industrielle. Par exemple, des zéolites 3 À peuvent être utilisés.

La pression partielle de chaque composé volatil augmente à mesure que les molécules de l'air atmosphérique sont adsorbées. Lorsque cette pression partielle dépasse la pression de vapeur saturante d'un composé, il se condense.

Cette condensation se produit en grande partie sur les zéolites eux-mêmes lors de l'adsorption. La difficulté de cette solution est la récupération de la part des anges liquéfiée qui aura tendance à s'accumuler sur les zéolites.

Dans le procédé selon l'invention, la récupération de la part des anges condensée peut être réalisée de nombreuses manières : par agitation des zéolites, par centrifugation...

### Par adsorption sélective de tout ou partie des composés volatils du mélange gazeux à traiter

L'air et les composés volatils sont par exemple séparés en raison de leurs cinétiques d'adsorption différentes (températures critiques et températures d'ébullition).

L'adsorption est d'autant plus importante que la température critique et la température d'ébullition d'une molécule ou d'un composé est haute. Or, les températures critiques du diazote (-147,1°C) et du dioxygène (-118,67 °C) sont très inférieures à celles de l'eau (374,15 °C) et des composés volatils issue des liquides alcoolisés 5, 10 (par exemple : éthanol (240,85°C), éthanal (192,85°C), acétate d'éthyle (250,15°C). On utilise la propriété des adsorbants selon laquelle un gaz adsorbé déplace préférentiellement les autres gaz qui ont été adsorbés auparavant pour séparer les composés volatils sur des critères de températures critiques et d'ébullitions. L'air est ainsi adsorbé tout comme la part des anges, mais se désorbe à mesure que les composés volatils s'adsorbent.

Sous des conditions de pression et de température permettant par exemple l'adsorption des composés volatils mais pas celle des molécules de l'air atmosphérique, les composés volatils et l'eau sont adsorbés durant une ou plusieurs phases d'adsorption et sont récupérées lors d'une ou plusieurs phases de désorption. Du fait du coût énergétique de désorption de l'eau, l'eau est préférablement retirée du mélange gazeux 32 au préalable par un autre procédé, comme la réfrigération, ou un passage sur de l'alumine.

Le séparateur selon l'invention utilise pour adsorber les composés volatils tout procédé connu d'adsorption et de désorption (PSA, VSA, TSA, etc.).

Le mélange gazeux 32 traverse un ou plusieurs lits d'adsorbant. Le processus d'adsorption est suivi d'une régénération de l'adsorbant par désorption avant une nouvelle saturation de l'adsorbant en composés volatils. C'est lors de la phase de désorption qu'est obtenu le liquide récupéré 36.

Des adsorbants avec des diamètres d'ouvertures de cavités différents correspondant aux diamètres moléculaires des composés volatils visés sont éventuellement utilisés. Les proportions respectives en adsorbants de chaque sorte sont avantageusement choisies de manière à ce que la composition du liquide récupéré 36 corresponde à des critères prédéterminés, par exemple par le maître de chai.

L'adsorption est par exemple fractionnée dans une succession de modules de récupération par adsorption. Ces modules fonctionnent suivant des procédés connus, éventuellement différents les uns des autres (PSA, TSA, VSA, etc.).

Par exemple, un premier module comportant un adsorbant de diamètre de cavité de 3À, récupère de l'eau présente dans le mélange gazeux 32, et un deuxième module comportant un adsorbant de diamètre de cavité de 4À récupère principalement de l'éthanol et de l'éthanal. Un troisième module, avec un adsorbant de diamètre de cavité de 5Å ou 6Å, récupère par exemple de l'acide acétique, un quatrième module, avec des adsorbants de diamètre de cavité de 6Å ou 7Å, récupère par exemple de l'acétate d'éthyle, du 1-propanol, du 1-butanol, du benzoate d'éthyle... Un cinquième module, avec des adsorbants de diamètre de cavité de supérieur à 6Å, récupère notamment des esters de diamètre plus important.

### Séparateur à membrane(s)

Les composés volatils sont par exemple séparés des molécules d'air, plus petites, grâce à une ou plusieurs membrane(s). Avantageusement, différents groupes de composés volatils de diamètres différents sont obtenus. L'eau, plus petite que certaines molécules de l'air, reste mélangée avec l'air.

La séparation est avantageusement fractionnée, grâce à des méthodes différentes (pervaporation, osmose inverse, nanofiltration, ultrafiltration, etc.) et/ou des forces motrices de transfert (pression, différence de température, force centrifuge, etc.) selon la taille des molécules à séparer.

### Condensation

Un abaissement de la température a pour conséquence de diminuer la pression de vapeur saturante. Lorsque la pression de vapeur saturante d'un gaz devient inférieure à sa pression partielle, le gaz se condense. D'autre part, moins un composé ou une molécule est concentrée dans un gaz, ici la part des anges, et plus sa pression partielle est faible. Afin d'obtenir une condensation de ces composés, la température du mélange gazeux à traiter est notablement abaissée.

Le séparateur utilise par exemple tout procédé de condensation pour récupérer les composés volatils, soit de manière globale, soit de manière fractionnée en abaissant progressivement la température et en récupérant séparément les condensats aux différentes températures.

### Condensation globale

La « part des anges » est en général constituée de nombreuses molécules avec des températures de fusion très différentes, comprises typiquement entre -127°C et 23°C. La condensation de certains composés volatils s'accompagne d'une congélation d'autres composés volatils dont la température de fusion est plus élevée.

La condensation des composés volatils est obtenue :
- soit par un abaissement de la température par une méthode connue : réfrigérateur à compression de vapeur (cycle de Rankine inversé), réfrigérateur à absorption de gaz (cycle de Carré), turbo réfrigération (cycle de Joule), moteur Stirling, refroidissement thermo acoustique, réfrigération magnétique, tube de Ranque-Hilsch, module Peltier, etc.,
- soit par une mise en contact direct ou indirect avec un gaz, un liquide ou un solide préalablement refroidis (azote liquide, carboglace, glace, etc.).

### Condensation fractionnée

Celle-ci est par exemple réalisée dans une colonne à plateaux.

La température minimum, en tête de la colonne, est adaptée pour que le gaz sortant ne contienne pas ou très peu de composés volatils, et pour que ni le dioxygène, ni le diazote du mélange gazeux 32 à traiter n'ait été liquéfiés. La température minimum est également adaptée pour que le composé volatil ayant la température de fusion la plus basse ne soit pas congelé tout en ayant une pression de vapeur saturante proche de zéro.

Les composés volatils correspondant aux différents plateaux sont récupérés séparément.

Préférentiellement, afin de mieux séparer les composés volatils, le système peut fonctionner en 3 étapes :
1) phase d'initialisation : entrée du gaz et liquéfaction d'un volume suffisant de composés volatils,
2) fonctionnement fermé jusqu'à équilibre des différents composés volatils sur leurs plateaux respectifs,
3) vidage du trop-plein des différents plateaux.

Un tel système permet de limiter le givrage, mais n'en est pas totalement exempt.

Préalablement à toute action de dégivrage, chaque plateau est vidé par une purge et les composés volatils liquéfiés sont récupérés par un système de purge. Pour réaliser le dégivrage, on augmente par exemple la température minimum et on récupère le givre fondu au travers du système de purge.

Préférentiellement, la température au niveau de chaque plateau est adaptée aux températures de fusion et d'ébullition des composés volatils que l'on veut séparer.

Eventuellement, chaque plateau est équipé de son propre système de régulation de température, afin d'ajuster la température de chaque plateau à la température de fusion du gaz recherché. Préférentiellement, le nombre de plateaux est égal au nombre de plateaux théoriques.

En pratique les composés volatils sont récupérés par familles en fonction de leur température de fusion. En effet certains composants possèdent des températures de fusion proche et il est difficile de les séparer de cette manière.

Avantageusement, le séparateur 30 combine plusieurs systèmes de séparation.

Ci-dessous sont détaillées quelques combinaisons non exhaustives de méthodes de récupération et/ou de fractionnement des composés volatils.
A. Première méthode : Adsorption de l'air ou de la part des anges et unique étape de fractionnement
   Cette méthode comporte deux phases :
   1) Première phase : récupération de composés volatils :
      a. par condensation globale, ou
      b. par adsorption de l'air, ou
      c. par adsorption des composés volatils.
   2) Seconde phase : fractionnement des composés volatils condensés :
      a. Soit par distillation fractionnée (tout procédé connu) éventuellement en deux étapes.
         i. Une première étape visant à un fractionnement à haut débit préférentiellement au moyen d'une colonne à plateaux,
         ii. Une seconde étape visant une grande précision de séparation préférentiellement au moyen d'une colonne à bande tournante.
      b. Soit par adsorption fractionnée des composés volatils, éventuellement suivie d'une distillation fractionnée fine (par exemple : colonne à bande tournante) séparément sur chaque fraction d'adsorbat obtenue ou sur une sélection d'entre eux
B. Seconde méthode : Distillation fractionnée après séparation de la part des anges de l'air atmosphérique suivie d'une adsorption fractionnée.
C. Troisième méthode : Condensation fractionnée suivie de :
   1) Soit une distillation fractionnée séparément sur chaque condensat obtenu,
   2) Soit une adsorption fractionnée sur chaque condensat obtenu.
D. Quatrième méthode : adsorption fractionnée suivie d'une distillation fractionnée séparément sur chaque fraction d'adsorbat obtenue.
E. Cinquième méthode : fractionnement des composés volatils en trois étapes

On commence par une condensation fractionnée suivie :
1) soit par une distillation fractionnée séparément sur chaque condensat obtenu, puis adsorption fractionnée sur chaque distillat obtenu,
2) soit par une adsorption fractionnée sur chaque condensat obtenu, puis distillation fractionnée séparément sur chaque fraction d'adsorbat obtenu.

Le système d'évacuation 40 est adapté pour récupérer le mélange gazeux résiduel 34 et en évacuer au moins une partie, de préférence la totalité, à l'extérieur de la première enceinte 15.

Le mélange gazeux résiduel 34 étant appauvri en alcool et en composés volatils issus des liquides alcoolisés 5, 10, le risque d'apparition de champignons sur ou à proximité de l'installation 1 est réduit.

Préférentiellement, le mélange gazeux résiduel est rejeté intégralement en dehors de l'enceinte la plus extérieure. En effet, le processus de vieillissement des liquides alcoolisés et la présence humaine consommant de l'oxygène, il est préférable soit de renouveler l'atmosphère interne des enceintes par de l'air extérieur à teneur atmosphérique en dioxygène, soit d'introduire artificiellement de l'oxygène (bombonne à oxygène, cartouche à oxygène, etc.), sous peine de perturber et de ralentir la maturation de l'eau-de-vie et de mettre en danger le personnel travaillant dans l'enceinte 15.

Le système d'évacuation 40 contrôle préférentiellement le débit et le taux d'alcool contenu dans le mélange gazeux résiduel 34 afin de vérifier que ce dernier ne contient plus d'alcool, ou que le taux d'alcool est suffisamment bas.

Le système d'admission d'air 45 est adapté pour renouveler l'air de l'atmosphère interne 17 par convection forcée. Ainsi, le système d'admission d'air 45 comprend par exemple un ventilateur ou une pompe (non représentés).

Selon un mode de réalisation particulier, le système d'admission d'air 45 n'est constitué que d'une ou plusieurs entrées d'air dans l'enceinte 15, la convection forcée étant assurée par l'aspiration créée par l'extracteur 28 et/ou le système d'évacuation 40. Le système d'admission 45 comprend préférentiellement des mécanismes de filtration préférentiellement successifs empêchant les animaux (exemple : par une grille), les poussières, pollens (exemple : filtre fin), particules fines (exemple : filtre à particule autonettoyant) et molécules issues de la pollution (exemple : lits d'adsorbant ou structure en nid d'abeille) de pénétrer dans l'enceinte.

Selon un autre mode de réalisation particulier, l'extracteur 28 et le système d'admission d'air 45 sont situés respectivement à un premier endroit et à un deuxième endroit de la première enceinte 15, le premier endroit et le deuxième endroit étant opposé l'un à l'autre dans la première enceinte de façon à créer un balayage gazeux autour des conteneurs 24.

L'extracteur 28, le séparateur 30 et le système d'admission d'air 45 sont avantageusement situés à l'extérieur de ou en limite du chai, c'est-à-dire de la première enceinte 15 dans l'exemple représenté sur la figure 1.

Le fonctionnement de l'installation 1 va maintenant être décrit et illustre un procédé selon l'invention.

Les conteneurs 24 sont tout d'abord remplis du liquide alcoolisé 5 et entreposés dans la première enceinte 15. Avantageusement, les conteneurs 24 renferment des liquides alcoolisés analogues selon l'un ou plusieurs des critères suivants : cépage, terroir, degré de maturation, et méthode de vieillissement. Ainsi, les composés volatils qu'ils exhalent sont également analogues.

On fait de même avec le liquide alcoolisé 10 dans les conteneurs 26 entreposés dans la deuxième enceinte 20.

La maturation des liquides alcoolisés 5, 10 relargue les composés volatils dans les atmosphères internes 17, 22.

Le fonctionnement de la première enceinte 15 et la deuxième enceinte 20 étant analogue, seul le fonctionnement de la première enceinte 15 sera décrit ci-après.

L'extracteur 28 extrait de la première enceinte 15 une partie de l'atmosphère interne 17 pour obtenir le mélange gazeux 32 à traiter. Le mélange gazeux 32 comporte une partie des composés volatils initialement présents dans l'atmosphère interne 17.

Le séparateur 30 sépare le mélange gazeux 32 en le mélange gazeux résiduel 34 appauvri en composé volatil et les liquides récupérés 36, 36B, 36C, 36D.

Le système d'évacuation 40 évacue le mélange gazeux résiduel 34 à l'extérieur de la première enceinte 15, c'est-à-dire dans l'atmosphère externe du chai dans l'exemple représenté.

Le système d'admission d'air 45 admet de l'air frais dans la première enceinte 15 par convection forcée. Ceci renouvelle l'atmosphère interne 17 et permet notamment de maintenir un taux d'oxygène compatible avec une présence humaine.

Avantageusement, les débits de l'extracteur 28 et du système d'admission d'air 45 sont régulés sur la base des mesures réalisées par le ou les capteurs 70.

La sécurité de l'installation 1 est avantageusement renforcée.

Préférentiellement, tous les équipements de l'installation 1 sont conformes à toute norme présente ou future relative à la production d'eau-de-vie dans le pays où est situé l'installation, par exemple aux normes alimentaires et aux normes en vigueur pour les atmosphères explosives (normes ATEX) imposant qu'aucune étincelle n'est produite lors du fonctionnement des équipements. Du fait du stockage d'eau-de-vie inflammable et explosive, les chais doivent se conformer à la juridiction liée aux sites à risque (zones SEVESO en Europe).

L'invention permet de maintenir le taux d'alcool dans les atmosphères internes 17, 22 en dessous du seuil d'inflammabilité. Pour cela, des systèmes de mesure du taux de vapeurs alcooliques (exemple : éthylomètres), tels que les capteurs 70, sont préférentiellement placés dans chaque enceinte, et le débit des extracteurs 28 et 48 et des admissions 45 et 65 est préférentiellement régulé de manière à maintenir les taux d'alcool et d'O₂ dans les limites assurant la sécurité du site et des personnes travaillant sur site.

Ainsi, grâce aux caractéristiques décrites ci-dessus, le procédé de maturation empêche ou limite le développement des champignons et limite grandement les risques d'explosion du site, d'asphyxie du personnel et de maladies professionnelles liées à l'inhalation de vapeurs alcooliques concentrées. Le procédé est en outre compatible avec le fonctionnement traditionnel d'un chai et les normes alimentaires en vigueur, et il est d'un coût modeste.

Le procédé et l'installation selon l'invention présente en outre l'intérêt de permettre la récupération et la valorisation de tout ou partie la « part des anges », perdue dans les techniques de maturation de l'art antérieur.

Les rendements du cognac et de l'armagnac par exemple sont faibles (1000 litres d'eau de vie par hectare après distillation et 740 litres au bout de 15 ans). Récupérer la « part des anges » permet d'augmenter le rendement, surtout pour les plus vieilles eaux de vie, qui sont les plus chères.

Il ne s'agit pas d'empêcher l'évaporation de la « part des anges », nécessaire à la concentration des composés aromatiques peu volatiles dans les conteneurs 24, 26, mais de la récupérer, et éventuellement d'en contrôler la quantité en déterminant à la fois la température dans le chai et la concentration de part des anges dans l'atmosphère du chai. Le procédé selon l'invention n'impose donc pas de changer le processus de maturation à l'intérieur des conteneurs 24, 26. Le maître de chai choisit le pourcentage de son stock qui deviendra de la « part des anges » effectivement perdue via et peut choisir de minimiser ce pourcentage en réintroduisant le liquide récupéré 56 dans les conteneurs 24, 26 dont provient la part des anges qui le constitue.

Actuellement, les chais sont maintenus autant que possible à saturation en alcool, ce qui présente des risques d'explosion mais permet de limiter la part des anges. L'opération de réintroduction dans les conteneurs 24 du liquide récupéré 36 est d'autant plus intéressante lorsque le taux d'alcool et de composés volatils dans l'atmosphère de l'enceinte 17 est maintenu au-dessous du seuil d'explosivité. En effet, dans ce cas, l'évaporation de l'eau-de-vie sera plus importante, du fait de la différence, importante en été, de concentration de l'alcool et des composés aromatiques volatils entre le ciel gazeux au-dessus de l'eau-de-vie 5 et l'atmosphère 17 de l'enceinte 15. Ce désavantage, auquel le procédé selon l'invention peut pallier, est accompagné d'un avantage : une meilleure ventilation en O₂.

Augmenter la quantité de liquide récupéré 36 dans le conteneur 24 dilue la concentration en composés aromatiques peu volatiles caractéristiques des eaux-de-vie vieilles, mais permet de limiter in fine les pertes d'eau-de-vie par évaporation. Le maître de chai peut donc déterminer une quantité de liquide récupéré 36 réintroduite dans le conteneur 24réalisant un compromis selon lui optimal entre d'une part la concentration progressive des composés aromatiques peu volatiles dans lesdits conteneurs, concentration qui est une caractéristique des eaux-de-vie mâtures, et d'autre part la limitation des pertes via la part des anges.

Le maître de chai peut également décider de fixer ledit compromis de manière différente pour des degrés de maturation différents de l'eau-de-vie (exemple : cognac).

Ces éléments ouvrent le champ à de nouvelles techniques de vieillissement des liquides alcoolisés, notamment le cognac.

Par exemple, le liquide récupéré 36 est introduit dans le liquide alcoolisé 5 au stade de l'assemblage afin de l'enrichir en composés « aromatiques » volatils.

Le phénomène d'oxydation du liquide alcoolisé, nécessaire au vieillissement, est d'autant plus important que le nombre de molécules de dioxygène et de liquide alcoolisé en contact est important. En utilisant le procédé selon l'invention, le nombre de molécules de liquide alcoolisé et de dioxygène reste inchangé.

Une oxydation des composés volatils présents dans l'atmosphère a également lieu, alors que le contact avec l'O2 est considérablement augmenté. La « part des anges » récupérée bénéficie ainsi d'une maturation « plus importante » que celle du liquide alcoolisé dont elle est issue.

Il est envisageable d'introduire le liquide récupéré :
- soit dans les conteneurs 24, 26 d'où il s'est évaporé,
- soit dans des conteneurs (non représentés) dédiés spécifiquement à la « part des anges », pour un vieillissement non plus de «X» (X étant par exemple du cognac, de l'armagnac, du rhum, du scotch, Irish Whiskey, ou du Bourbon, etc.), mais de « part des Anges de X »,
- soit dans des conteneurs (non représentés) pour le vieillissement d'un assemblage de « X » et de « part des anges de X ».

L'invention permet de conserver du cognac durant une très longue période. Il est possible de réduire considérablement la perte en liquide alcoolisé :
- en réintroduisant la « part des anges » récupérée dans les conteneurs dont elle provient.
- en compensant la consommation d'oxygène par une introduction d'oxygène seul dans le conteneur. Cet oxygène peut être fourni par une cartouche à oxygène, par de l'oxygène comprimé, de l'oxygène liquide ou par un générateur d'oxygène localisé dans le chai ou près de celui-ci.

L'invention permet de mieux contrôler l'atmosphère autour des conteneurs de liquide alcoolisé. Au cours de la maturation des liquides alcoolisés, les processus dominants (« digestion » du bois, oxydation, etc.) changent, si bien que les besoins changent également. Avec le procédé selon l'invention, il devient possible d'ajuster l'environnement des conteneurs de manière à optimiser la maturation. En effet, il est possible de régler finement la température, la pression, la ventilation, la teneur de oxygène et celle en part des anges. En particulier, il est possible de maintenir dans les enceintes où l'homme n'intervient que peu ou pas, le taux de composés volatils au plus proche de la valeur de saturation, afin de permettre l'oxydation du liquide alcoolisé tout en limitant son évaporation.

La sécurité des chais est améliorée. Cet élément est préférentiellement pris en compte par le procédé selon l'invention, car le remplacement de la ventilation par ouverture des portes et fenêtres par une convection forcée permet de s'assurer que les taux de dioxygène et de certains des composés volatils restent compatibles avec une éventuelle présence humaine et avec la maîtrise des risques d'inflammation.

L'invention permet un processus de vieillissement rapide, bien que naturel, consistant à moins - éventuellement beaucoup moins - remplir les conteneurs de liquide alcoolisé que ne le veut la tradition, en particulier dans les phases de vieillissement au cours desquelles l'oxydation est primordiale. De cette manière, l'oxydation du liquide alcoolisé est plus importante que traditionnellement, au prix d'une évaporation plus élevée. Ce dernier point n'est, grâce au procédé selon l'invention, plus un problème. En effet, le liquide récupéré peut être réintroduit entièrement ou en partie par ouillage dans les conteneurs.

Ainsi, le procédé selon l'invention permet :
- un nouveau produit constitué par le liquide 56, 72 vendu tel que récupéré, ou bien transformé, ou bien encore vieilli dans des fûts,
- des gains très importants pour les producteurs de spiritueux,
- de revaloriser les stocks,
- des produits de qualité supérieure à forte valeur,
- une possibilité de faire vieillir plus longtemps les eaux-de-vie en fût, sans augmenter la perte en volume liée à la part des anges
- une plus grande maîtrise de la maturation des liquides alcoolisés par le maître de chai,
- une plus grande diversité des boissons alcoolisées produites, grâce aux nouvelles possibilités de pilotage et de traçabilité de la maturation des liquides alcoolisés, mais aussi d'assemblage (assemblage de millésimes d'eau de vie et de « part des anges »), et/ou
- une exacerbation de certains goûts et parfums dans les produits pour lesquels la « part des anges » est ajoutée à l'assemblage, donnant l'impression d'un goût et d'un nez nouveau.

## Revendications

1. Procédé de maturation d'au moins un liquide alcoolisé (5), le liquide alcoolisé (5) étant destiné à devenir une boisson alcoolisée ou un ingrédient de boisson alcoolisé, le procédé comprenant au moins les étapes suivantes :
- utilisation d'une enceinte (15) située dans un chai, et contenant au moins un conteneur (24) renfermant le liquide alcoolisé (5), le conteneur (24) étant au moins en partie en bois ou contenant du bois, et une atmosphère interne (17) comprenant de l'oxygène, l'enceinte (15) étant étanche ou semi-étanche,
- optionnellement une étanchéisation de l'enceinte (15),
- maturation du liquide alcoolisé (5) dans le conteneur (24), la maturation consommant une partie de l'oxygène présent dans l'atmosphère interne (17) et relâchant dans l'atmosphère interne (17) des composés volatils provenant du liquide alcoolisé (5),
- extraction de l'enceinte (15) d'une partie de l'atmosphère interne (17) pour obtenir un mélange gazeux (32) à traiter comprenant au moins une partie des composés volatils,
- séparation du mélange gazeux (32) à traiter en au moins un mélange gazeux résiduel (34) appauvri en lesdits composés volatils par rapport au mélange gazeux (32) à traiter, et au moins un liquide récupéré (36) contenant au moins une partie des composés volatils du mélange gazeux (32) à traiter,
- évacuation d'au moins une partie, de préférence la totalité, du mélange gazeux résiduel (34) à l'extérieur de l'enceinte (15), et
- admission d'air dans l'enceinte (15) par convection forcée,
le liquide récupéré (36) étant destiné à former une boisson alcoolisée ou un ingrédient d'une composition, notamment une boisson alcoolisée ou un parfum.

2. Procédé selon la revendication 1, dans lequel l'enceinte (15) est formée par le chai lui-même, une partie du chai, ou bien est un conteneur (20) situé dans le chai.

3. Procédé selon la revendication 1 ou 2, dans lequel :
- l'extraction est réalisée par un extracteur (28) situé à l'extérieur du chai, ou
- la séparation du mélange gazeux (32) à traiter est réalisée hors du chai, ou
- l'évacuation est réalisée hors du chai.

4. Procédé selon l'une quelconque de revendications 1 à 3, comprenant en outre une étape de stockage du liquide récupéré (36) dans au moins un récipient (72), de préférence muni d'au moins une entrée unidirectionnelle (74) pour recevoir le liquide récupéré (36).

5. Procédé selon l'une quelconque des revendications 1 à 4, comprenant en outre une étape de mesure du taux d'oxygène ou du taux en l'un ou plusieurs des composés volatils dans l'atmosphère interne (17) de l'enceinte (15), et de préférence une étape de régulation de l'un ou plusieurs de ces taux, l'étape de régulation comprenant une modification de l'étape d'extraction de l'enceinte (15) d'une partie de l'atmosphère interne (17), ou une modification de l'étape d'admission d'air.

6. Procédé selon l'une quelconque des revendications 1 à 5, dans lequel l'enceinte (15) contient plusieurs conteneurs (24) renfermant respectivement des liquides alcoolisés (5), les liquides alcoolisés (5) étant identiques selon l'un ou plusieurs des critères suivants : cépage, terroir, degré de maturation, et méthode de vieillissement.

7. Procédé selon l'une quelconque des revendications 1 à 6, dans lequel l'extraction d'une partie de l'atmosphère interne (17) est réalisée à un premier endroit de l'enceinte (15), et l'admission d'air est réalisée à un deuxième endroit de l'enceinte (15), le premier endroit et le deuxième endroit étant opposés l'un à l'autre dans l'enceinte (15) de façon à créer un balayage gazeux autour du conteneur (24).

8. Procédé selon l'une quelconque des revendications 1 à 7, dans lequel la séparation est réalisée au moins par l'un ou plusieurs des modules suivants :
- un module de séparation PSA, VSA ou TSA contenant au moins un lit d'adsorbant, l'adsorbant étant adapté pour adsorber sélectivement l'air du mélange gazeux (32) à traiter par rapport à au moins une partie des composés volatils présents dans le mélange gazeux (32) à traiter, ou au moins une partie des composés volatils par rapport à l'air,
- un module de séparation à membrane,
- un condenseur (80) adapté pour réaliser une condensation d'au moins une partie des composés volatils présents dans le mélange gazeux (32) à traiter, et
- un distillateur adapté pour distiller un mélange comprenant au moins une partie des composés volatils présents dans le mélange gazeux à traiter.

9. Procédé selon l'une quelconque des revendications 1 à 8, dans lequel la séparation est fractionnée de manière à obtenir le liquide récupéré (36) et un ou plusieurs autres liquides récupérés (36B, 36C, 36D), chacun des autres liquides récupérés (36B, 36C, 36D) comprenant une partie des composés volatils présents dans le mélange gazeux (32) à traiter.

10. Installation (1) de maturation d'au moins un liquide alcoolisé (5) destiné à devenir une boisson alcoolisée ou un ingrédient de boisson alcoolisée, l'installation comprenant :
- au moins une enceinte (15) destinée à être située dans un chai, l'enceinte (15) étant étanche ou semi-étanche et comprenant une atmosphère interne (17) comprenant de l'oxygène, l'enceinte (15) étant optionnellement étanchéifiée,
- au moins un conteneur (24) destiné à être situé dans l'enceinte (15) et à renfermer le liquide alcoolisé (5), le conteneur (24) étant au moins en partie en bois ou contenant du bois, et le conteneur (24) étant adapté pour permettre une maturation du liquide alcoolisé (5), la maturation consommant une partie de l'oxygène présent dans l'atmosphère interne (17) et relâchant dans l'atmosphère interne (17) des composés volatils provenant du liquide alcoolisé (5),
- au moins un extracteur (28) pour extraire de l'enceinte (15) une partie de l'atmosphère interne (17) et obtenir un mélange gazeux (32) à traiter comprenant au moins une partie des composés volatils,
- au moins un séparateur (30) pour séparer le mélange gazeux (32) à traiter en au moins un mélange gazeux résiduel (34) appauvri en lesdits composés volatils, et au moins un liquide récupéré (36) contenant au moins une partie des composés volatils du mélange gazeux (32) à traiter,
- au moins un système d'évacuation (40) pour évacuer au moins 50% en volume, de préférence la totalité, du mélange gazeux résiduel (34) à l'extérieur de l'enceinte (15), et
- au moins un système d'admission d'air (65) par convection forcée dans l'enceinte (15),
le liquide récupéré (36) étant destiné à former une boisson alcoolisée ou un ingrédient d'une composition, notamment une boisson alcoolisée ou un parfum.

## Patentansprüche

1. Reifeprozess mindestens einer alkoholischen Flüssigkeit (5), wobei die alkoholische Flüssigkeit ein alkoholisches Getränk oder eine alkoholische Getränkezutat werden soll. Der Prozess besteht mindestens aus folgenden Etappen :
- Benutzung eines abgeschlossenen Bereichs (15), der in einem Weinlager liegt und mindestens mit einem eine alkoholische Flüssigkeit (5) enthaltenden Container (24) ausgestattet ist, der mindestens zum Teil aus Holz ist oder aus Holz besteht. Der abgeschlossene Bereich (15) umfasst eine teilweise aus Sauerstoff bestehende Innenatmosphäre (17) und ist undurchlässig oder halbdurchlässig,
- optionales Abdichten des abgeschlossenen Bereichs (15),
- Reifung der alkoholischen Flüssigkeit (5) im Container (24), wobei ein Teil des in der Innenatmosphäre (17) anwesenden Sauerstoffs verbraucht wird und flüchtige Verbindungen aus der alkoholischen Flüssigkeit (5) in der Innenatmosphäre (17) freigesetzt werden,
- Extraktion eines Teils der Innenatmosphäre (17) aus dem abgeschlossenen Bereich (15), um ein zu behandelndes Gasgemisch (32) zu erhalten, das mindestens einen Teil der flüchtigen Verbindungen enthält,
- Trennung des zu behandelnden Gasgemisches (32) in mindestens ein an benannten flüchtigen Verbindungen abgereichertes Restgasgemisch (34) im Vergleich zu dem zu behandelnden Gasgemisch (32), und mindestens eine angesammelte Flüssigkeit (36), die mindestens einen Teil der flüchtigen Verbindungen des zu behandelnden Gasgemisches (32) enthält,
- Abführung mindestens eines Teiles, vorzugsweise der Gesamtheit des Restgasgemisches (34) außerhalb des abgeschlossenen Bereichs (15), und
- Einlass der Luft im abgeschlossenen Bereich (15) durch Zwangskonvektion,
Die angesammelte Flüssigkeit (36) soll ein alkoholisches Getränk oder eine Zutat einer Zusammensetzung besonders einer alkoholischen Flüssigkeit oder eines Parfüms werden.

2. Verfahren nach Anspruch 1, wobei der abgeschlossene Bereich (15) von dem Weinlager selbst oder von einem Teil des Weinlagers gebildet wird, oder ein Container (20) ist, der sich im Weinlager befindet.

3. Verfahren nach Ansprüchen 1 - 2, wobei:
- die Extraktion von einem sich außerhalb des Weinlagers befindenden Extraktor (28) ausgeführt wird, oder
- die Trennung des zu behandelnden Gasgemisches (32) außerhalb des Weinlagers ausgeführt wird, oder
- die Evakuierung außerhalb des Weinlagers ausgeführt wird.

4. Verfahren nach einem der Ansprüche 1 bis 3, unter anderen umfassend einen Schritt zur Lagerung der angesammelten Flüssigkeit (36) in mindestens einem Behälter (72), vorzugsweise mit mindestens einem unidirektionalen Einlass (74), um die angesammelte Flüssigkeit (36) aufzufangen.

5. Verfahren nach einem der Ansprüche 1 bis 4, unter anderen umfassend einen Schritt zur Messung des Sauerstoffgehalts oder des Gehalts an einer oder mehrerer der flüchtigen Verbindungen in der Innenatmosphäre (17) des abgeschlossenen Bereichs (15), und vorzugsweise umfassend einen Schritt zum Regulieren einer oder mehrerer dieser Gehalte, der Schritt zum Regulieren umfassend eine Änderung des Schritts zur Extraktion eines Teils der Innenatmosphäre (17) aus dem abgeschlossenen Bereich (15) oder eine Änderung des Schritts zum Lufteinlass.

6. Verfahren nach einem der Ansprüche 1 bis 5, wobei der abgeschlossene Bereich (15) mehrere Container (24) enthält, die jeweils alkoholische Flüssigkeiten (5) umfassen, wobei die alkoholische Flüssigkeiten nach einem oder mehreren folgenden Kriterien identisch sind : Rebsorte, Herkunftsgebiet, Reifegrad und Reifungsmethode.

7. Verfahren nach einem der Ansprüche 1 bis 6, wobei die Extraktion eines Teils der Innenatmosphäre (17) an einer ersten Stelle des abgeschlossenen Bereichs (15) erfolgt, und der Lufteinlass an einer zweiten Stelle des abgeschlossenen Bereichs (15) erfolgt, wobei die erste Stelle und die zweite Stelle im abgeschlossenen Bereich (15) einander gegenüberliegen, so dass eine Gasspülung um den Container (24) geschaffen wird.

8. Verfahren nach einem der Ansprüche 1 bis 7, wobei die Trennung mindestens von einem oder mehreren folgenden Module durchgeführt wird :
- einem PSA (Druckwechsel-Adsorption), VSA (Vacuum Swing Adsorption) oder TSA (Temperature Swing Adsorption) Abtrennungsmodul, das mindestens ein Adsorptionsmittelbett enthält, wobei das Adsorptionsmittel angepasst ist, um die Luft von dem zu behandelnden Gasgemisch (32) gezielt zu absorbieren, in Bezug auf mindestens einen Teil der im zu behandelnden Gasgemisch (32) anwesenden flüchtigen Verbindungen, oder mindestens einen Teil der flüchtigen Verbindungen gegenüber Luft,
- einem Membran-Abtrennungsmodul,
- einem Kondensator (80), der dazu angepasst ist, eine Kondensation von mindestens einem Teil der im zu behandelnden Gasgemisch (32) anwesenden flüchtigen Verbindungen durchzuführen, und
- einer Destillationsanlage, die dazu angepasst ist, ein Gemisch zu destillieren, das mindestens einen Teil der im zu behandelnden Gasgemisch (32) anwesenden flüchtigen Verbindungen enthält.

9. Verfahren nach einem der Ansprüche 1 bis 8, wobei die Trennung aufgeteilt wird, um die angesammelte Flüssigkeit (36) und eine oder mehrere andere angesammelte Flüssigkeiten (36B, 36C, 36D) zu erhalten, wobei jede der anderen angesammelten Flüssigkeiten (36B, 36C, 36D) einen Teil der im zu behandelnden Gasgemisch (32) anwesenden flüchtigen Verbindungen enthält.

10. Anlage (1) zur Reifung von mindestens einer alkoholischen Flüssigkeit (5), wobei die alkoholische Flüssigkeit ein alkoholisches Getränk oder eine alkoholische Getränkezutat werden soll. Die Anlage besteht aus :
- mindestens einem abgeschlossenen Bereich (15), der in einem Weinlager liegt, undurchlässig oder halbdurchlässig ist, wahlweise abgedichtet wird, und eine teilweise aus Sauerstoff bestehende Innenatmosphäre (17) umfasst,
- mindestens einem Container (24), der im abgeschlossenen Bereich (15) liegt und die alkoholische Flüssigkeit (5) enthält. Der Container (24) ist mindestens zum Teil aus Holz oder besteht aus Holz und ist dazu angepasst, eine Reifung der alkoholischen Flüssigkeit (5) zu erlauben, wobei ein Teil des in der Innenatmosphäre (17) anwesenden Sauerstoffs verbraucht wird und flüchtige Verbindungen aus der alkoholischen Flüssigkeit (5) in der Innenatmosphäre (17) freigesetzt werden,
- mindestens einem Extraktor (28), um die Extraktion eines Teils der InnenAtmosphäre (17) aus dem abgeschlossenen Bereich (15) durchzuführen und ein zu behandelndes Gasgemisch (32) zu erhalten, das mindestens einen Teil der flüchtigen Verbindungen enthält,
- mindestens einem Separator (30), um das zu behandelnde Gasgemisch (32) in mindestens ein an den benannten flüchtigen Verbindungen abgereichertes Restgasgemisch (34), und mindestens eine angesammelte Flüssigkeit (36) zu trennen, wobei die angesammelte Flüssigkeit (36) mindestens einen Teil der flüchtigen Verbindungen des zu behandelnden Gasgemisches (32) enthält,
- mindestens einem Evakuierungssystem (40), um mindestens 50 VolumenProzent, vorzugsweise der Gesamtheit des Restgasgemisches (34) außerhalb des abgeschlossenen Bereichs (15) abzuführen, und
- mindestens einem Lufteinlass-System (65) mit Zwangskonvektion im abgeschlossenen Bereich (15),
Die angesammelte Flüssigkeit (36) soll ein alkoholisches Getränk oder eine Zutat einer Zusammensetzung vor allem einer alkoholischen Flüssigkeit oder eines Parfüms werden.

## Claims

1. Process for the maturation of at least one alcoholic liquid (5), the alcoholic liquid (5) being intended to become an alcoholic beverage or an alcoholic beverage ingredient, the process comprising at least the following steps:
- use of an enclosure (15) located in a cellar, and containing at least one container (24) containing the alcoholic liquid (5), the container (24) being at least partly made of wood or containing wood, and a internal atmosphere (17) comprising oxygen, the enclosure (15) being sealed or semi-sealed,
optionally sealing the enclosure (15),
- Maturation of the alcoholic liquid (5) in the container (24), the maturation consuming a portion of the oxygen present in the internal atmosphere (17) and releasing into the internal atmosphere (17) volatile compounds from the alcoholic liquid (5), - extraction of the enclosure (15) from part of the internal atmosphere (17) to obtain a gaseous mixture (32) to be treated comprising at least a part of the volatile compounds,
separating the gaseous mixture (32) to be treated into at least one residual gaseous mixture (34) depleted of said volatile compounds with respect to the gaseous mixture (32) to be treated, and at least one recovered liquid (36) containing at least a part volatile compounds of the gaseous mixture (32) to be treated,
- evacuation of at least a portion, preferably all, of the residual gas mixture (34) outside the enclosure (15), and
- admission of air into the enclosure (15) by forced convection,
the recovered liquid (36) being intended to form an alcoholic beverage or an ingredient of a composition, especially an alcoholic beverage or a perfume.

2. Method according to claim 1, wherein the enclosure (15) is formed by the cellar itself, a portion of the cellar, or is a container (20) located in the cellar.

3. Method according to claim 1 or 2, wherein:
the extraction is carried out by an extractor (28) located outside the cellar, or
the separation of the gaseous mixture (32) to be treated is carried out outside the cellar, or
- The evacuation is carried out outside the cellar.

4. Process according to any one of claims 1 to 3, further comprising a step of storing the recovered liquid (36) in at least one container (72), preferably provided with at least one unidirectional inlet (74) to receive the recovered liquid (36).

5. Process according to any one of claims 1 to 4, further comprising a step of measuring the oxygen content or the level in one or more of the volatile compounds in the internal atmosphere (17) of the enclosure (15), and preferably a step of controlling one or more of these levels, the regulating step comprising a modification of the step of extracting the enclosure (15) from a part of the internal atmosphere (17), or a modification of the air intake step.

6. Process according to any one of claims 1 to 5, wherein the enclosure (15) contains several containers (24) respectively containing liquids (5) alcoholic liquids (5) being identical according to one or more of the following criteria: grape variety, terroir, degree of ripening, and aging method.

7. Process according to any one of claims 1 to 6, wherein the extraction of a portion of the internal atmosphere (17) is performed at a first location of the enclosure (15), and the admission of air is performed at a second location of the enclosure (15), the first and second locations being opposed to each other in the enclosure (15) so as to create a gaseous sweep around the container (24).

8. Method according to any one of claims 1 to 7, wherein the separation is performed at least by one or more of the following modules:
a separation module PSA, VSA or TSA containing at least one adsorbent bed, the adsorbent being adapted to selectively adsorb the air from the gas mixture (32) to be treated with respect to at least a part of the volatile compounds present in the gaseous mixture (32) to be treated, or at least a part of the volatile compounds with respect to the air,
a membrane separation module,
a condenser (80) adapted to carry out a condensation of at least a part of the volatile compounds present in the gaseous mixture (32) to be treated, and
a distiller adapted to distil a mixture comprising at least a part of the volatile compounds present in the gaseous mixture to be treated.

9. The process according to any one of claims 1 to 8, wherein the separation is fractionated so as to obtain the recovered liquid (36) and one or more other recovered liquids (36B, 36C, 36D), each of the other liquids, recovered (36B, 36C, 36D) comprising a portion of the volatile compounds present in the gas mixture (32) to be treated.

10. Installation (1) for the maturation of at least one alcoholic liquid (5) intended to become an alcoholic beverage or an alcoholic beverage ingredient, the installation comprising: at least one enclosure (15) intended to be located in a cellar, the enclosure (15) being watertight or semi-waterproof and comprising an internal atmosphere (17) comprising oxygen, the enclosure (15) being optionally sealed,
at least one container (24) intended to be located in the enclosure (15) and to enclose the alcoholic liquid (5), the container (24) being at least partly made of wood or containing wood, and the container (24) being adapted to allow maturation of the alcoholic liquid (5), the maturation consuming part of the oxygen present in the internal atmosphere (17) and releasing in the internal atmosphere (17) volatile compounds from the alcoholic liquid (5) at least one extractor (28) for extracting part of the internal atmosphere (17) from the enclosure (15) and obtaining a gaseous mixture (32) to be treated comprising at least part of the volatile compounds,
at least one separator (30) for separating the gaseous mixture (32) to be treated into at least one residual gaseous mixture (34) depleted of said volatile compounds, and at least one recovered liquid (36) containing at least a part of the compounds volatile gases of the gaseous mixture (32) to be treated,
at least one evacuation system (40) for evacuating at least 50% by volume, preferably all, of the residual gas mixture (34) outside the chamber (15), and
- At least one air intake system (65) by forced convection in the enclosure (15)
the recovered 1
iquid (36) being intended to form an alcoholic beverage or an ingredient of a composition, especially an alcoholic beverage or a perfume.
